# EUROPÄISCHE PATENTSCHRIFT

(11) **EP 1 302 452 B1**
(45) Veröffentlichungstag und Bekanntmachung des Hinweises auf die Patenterteilung: **16.03.2011**
(21) Anmeldenummer: 02022057.0
(22) Anmeldetag: 02.10.2002
(51) Int. Cl.: C04B 7/43, F27B 7/20

(54) **Mehrstrang-Anlage zur Herstellung von Zementklinker aus Rohmehl**
Multi-string installation for producing cement from raw meal
Dispositif de traitement multiple pour la fabrication de ciment à partir de farine crue

(30) Priorität: 11.10.2001 DE 10150097
(43) Veröffentlichungstag der Anmeldung: 16.04.2003
(73) Patentinhaber: KHD Humboldt Wedag GmbH, 51067 Köln (DE)
(72) Erfinder: Eckert, Carsten, 51061 Köln (DE); Köllen, Stefan, 50226 Frechen (DE); Ramesohl, Hubert, 51427 Bergisch Gladbach (DE); Mersmann, Matthias, 4731 Lichtenbusch (BE)

(56) Entgegenhaltungen:
- EP-A1- 0 076 894
- EP-A1- 0 188 187
- EP-A2- 0 005 469
- DE-A1- 3 222 131
- US-A- 4 050 882
- US-A- 4 094 626
- US-A- 4 669 976
- US-A- 5 122 190

## Beschreibung

Die Erfindung betrifft eine Anlage zur Herstellung von Zementklinker aus Rohmehl, das in wenigstens zwei zueinander parallelen Zyklonschwebegas-Wärmetauschersträngen vorerhitzt und in einer mit Brennstoff versorgten Calcinierstufe vorcalciniert wird, aus der die Gas-Feststoff-Suspension durch Suspensions-Aufteilung in die jeweils unterste Zyklonstufe der Zyklonschwebegas-Wärmetauscherstränge zwecks Abtrennung des vorcalcinierten Rohmehls vom Abgasstrom eingeführt ist, wobei die vorcalcinierten Rohmehlteilströme aller Wärmetauscher-Stränge anschließend in einen Drehrohrofen für den Zementklinkerbrand eingeführt sind.

Anlagen zur Herstellung von Zementklinker aus Rohmehl werden bei großen geforderten Produktionsleistungen oft als Zweistrang-Anlagen bzw. Zwillingssysteme ausgeführt, mit zwei getrennten zueinander parallelen als Rohmehl-Calcinatoren ausgebildeten und mit Brennstoff versorgten Drehofenabgas-Steigleitungen und mit zwei zueinander parallelen von den Calcinatorabgasen durchströmten Zyklonschwebegas-Wärmetauschersträngen, wobei in beiden Strängen jeweils ein Rohmehl-Teilstrom thermisch behandelt wird (Broschüre "PYROCLON" 7-222 d der KHD Humboldt Wedag AG, 1979, Seiten 4 und 5 Bild 3). Dabei ist nicht auszuschließen, dass es in beiden Calciniersträngen und Wärmetauschersträngen zu unterschiedlichen Gas- und Mehlbelastungen der Gas-Feststoffsuspension kommt, nicht zuletzt verursacht durch die Drehrichtung des Drehrohrofens, an dessen Guteinlaufkammer die beiden Stränge angeschlossen sind.

Es sind auch sogenannte "Zwitteranlagen" bekannt, bei denen die beiden oben beschriebenen getrennten Calcinatorstränge zu einem einzigen vom Drehofenabgas durchströmten und mit Calcinierbrennstoff versorgten schachtförmigen Calcinator zuammengefasst sind, an dessen oberem Ende die von unten nach oben strömende Gas-Feststoff-Suspension in zwei Teilströme aufgeteilt wird, die dann über zwei voneinander weggeneigte Rohrleitungskrümmer den beiden Wärmetauschersträngen zugeleitet werden (Cement-Data-Book von Duda 2. Auflage 1977, Seite 419). Auch hierbei ist nicht auszuschließen, dass es bei der Aufzweigung der Gas-Feststoffsuspension aus dem Calcinator zu unterschiedlichen Mehl- und Gasbeaufschlagungen und damit auch zu stark unterschiedlichen Belastungen der einzelnen Wärmetauscherstränge kommen kann, was sich ungünstig auf den spezifischen Wärmebedarf der Gesamtanlage auswirkt.

Dieses Problem wird noch dann verstärkt, wenn in der Drehofenabgassteigleitung, also im Calcinator an wenigstens einer DeNOₓ-Brennstelle eingeführter Brennstoff unterstöchiometrisch, d. h. mit Sauerstoffunterschuss verbrannt wird zwecks Schaffung einer CO-haltigen Reduktionszone bzw. CO-Gassträhne zur Reduktion des Schadstoffes NOₓ, der insbesondere durch die Hochtemperaturverbrennung im Drehrohrofen gebildet worden ist (thermisches NOₓ). Dabei ist die CO-Gassträhne nicht gleichmäßig über den Calcinatorquerschnitt verteilt. Besonders dann, wenn es nicht gelingt, das in der NOₓ-Reduktionszone des Drehofenabgaskanals nicht verbrauchte CO sowie im Calcinator zunächst nicht verbrannte Festbrennstoffpartikel nicht vollständig auszubrennen, ist nicht auszuschließen, dass es in beiden Wärmetauschersträngen zu unterschiedlichen auch stoßweisen strähnenhaften Brennstoffbelastungen kommen kann.

Der Erfindung liegt daher die Aufgabe zugrunde, zur Herstellung von Zementklinker aus Rohmehl eine Zweistrang- oder Mehrstrang-Anlage zu schaffen, bei der gewährleistet ist, dass die einzelnen Zyklonschwebegas-Wärmetauscherstränge nicht mehr mit unterschiedlichen Gas- und Mehlbeladungen der strömenden Gas-Feststoffsuspension belastet werden.

Diese Aufgabe wird erfindungsgmäß mit einer Anlage mit den Merkmalen des Anspruchs 1 gelöst. Vorteilhafte Ausgestaltungen der Erfindung sind in den Unteransprüchen angegeben.

Charakteristisch für die erfindungsgemäße Zementklinkerherstellungsanlage mit zwei- oder mehrsträngig ausgeführten Wärmetauscherlinien, die von einem gemeinsamen Calcinator mit einer Calcinationsabgas-Suspension beschickt werden, ist, in der Calcinierstufe, spätestens an deren Ende strömungsmäßig vor ihrer Verzweigung und Aufteilung auf die einzelnen Wärmetauscherstränge eine Wirbelkammer/Mischkammer/Homogenisierkammer angeordnet ist mit einer Eintrittsöffnung für die Gas-Feststoffsuspension und mit wenigstens zwei Auslässen zum Austritt der vergleichmäßigten Gas-Feststoffsuspensions-Teilströme. In dieser Homogenisierkammer wird die Gas-Feststoffsuspension des Calcinators mit einem z. B. durch CO-Strähnen inhomogen beladenen Gas wirkungsvoll vergleichmäßigt, bevor dann anschließend die vergleichmäßigte homogenisierte Gas-Feststoffsuspension auf die einzelnen Wärmetauscherstränge aufgeteilt wird, wodurch der spezifische Wärmebedarf der Mehrstranganlage minimiert und deren Betriebssicherheit erhöht sind. Dies gilt besonders für Mehrstrang-Anlagen mit DeNOₓ-Brennstellen im Calcinator zwecks DeNOₓ-Reduktion im Abgas, weil die Homogenisierkammer auch für eine intensive Vermischung der im Calcinator noch vorhandenen Restbrennstoffbestandteile wie restliche CO-Gassträhnen etc. mit Luftsauerstoff und damit für den Restausbrand und somit auch für eine hochgradige Rohmehlcalcination (z. B. 95 %) sorgt.

Die Wirbelkammer/Mischkammer/Homogenisierkammer mit anschließender Verzweigung der homogenisierten Gas-Feststoffsuspension ist so ausgebildet, dass sie vorhandene Inhomogenitäten der einströmenden Gas-Feststoffsuspension durch intensive Vermischung vergleichmäßigt. Dazu kann die Eintrittsöffnung der Wirbelkammer so angeordnet sein, dass der eintretenden Gas-Feststoffsuspension eine Drallkomponente überlagert wird; es ist aber auch möglich, dass zu diesem Zweck in die Wirbelkammer ein feststehender oder rotierender Drallerzeuger eingebaut ist, z. B. an der Decke eines zentral von unten von der Gas-Feststoffsuspension angeströmten Wirbel- und Trenntopfs mit Ablenkung der Strömung zur Peripherie, Umlenkung nach unten und Leitung zu wenigstens zwei unteren Auslässen für die homogenisierte Gas-Feststoffsuspension zwecks Aufteilung auf die getrennten Zyklonschwebegas-Wärmetauscherstränge.

Zur wirkungsvollen Homogenisierung der Gas-Feststoffsuspension kann die in der Calcinierstufe angeorndete Wirbelkammer in ihrem oberen Bereich eine Öffnung zum tangentialen Eintritt der Gas-Feststoffsuspension und an ihrer Unterseite zwei oder mehr Auslässe zum Austrag der vermischten homogenisierten Gas-Feststoffsuspension aufweisen, wobei diese Auslässe über jeweils eine Rohrleitung mit der untersten Zyklonstufe jeweils eines Zyklonschwebegas-Wärmetauscherstranges verbunden sind.

Die Erfindung und deren weitere Merkmale und Vorteile werden anhand der in den Figuren schematisch dargestellten Ausführungsbeispiele näher erläutert.

Es zeigt:
- Fig. 1:: als Blockschaltbild schematisch eine Anlage zur Herstellung von Zementklinker mit von unten nach oben gesehen einem Drehrohrofen, einem Calcinator und mit einer Wirbelkammer/Mischkammer/Homogenisierkammer mit anschließender Verzweigung der Gas-Feststoffsuspension auf zwei zueinander parallele Wärmetauscherstränge,
- Fig. 2:: eine Anlage zur Zementklinkerherstellung mit Zweistrang-Vorwärmer, weniger schematisch gezeichnet, und
- Fig. 3:: als Variante zu Fig.2 eine andere Ausführungsform der Wirbelkammer/Mischkammer/Homogenisierkammer.

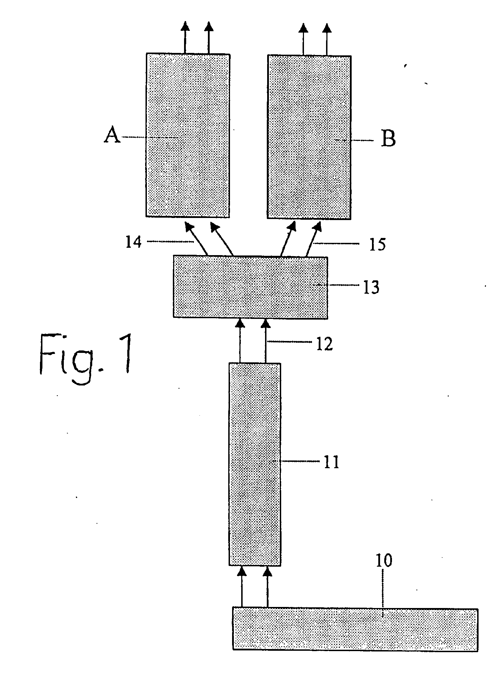

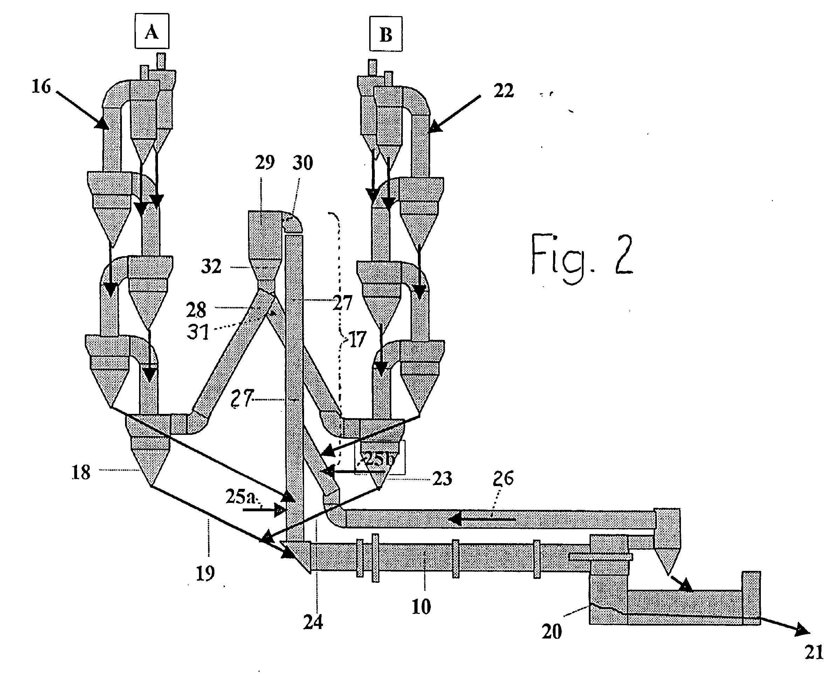

Die Zementklinkerherstellungsanlage nach Figur 1 weist einen Drehrohrofen 10 und eine von Drehofenabgas durchströmte und in der Regel mit Calcinierbrennstoff und Klinkerkühlerabluft (Tertiärluft) versorgte Calcinierstufe 11 auf, dessen Gasstrom 12 inhomogen mit Feststoff, nämlich vorcalciniertem Rohmehl und unverbrannt gebliebenem Festbrennstoff sowie auch inhomogen mit Abgaskomponenten wie z. B. CO beladen ist. Daher wird die Gas-Feststoffsuspension des Calcinators 11 erfindungsgemäß zunächst in eine Wirbelkammer/Mischkammer/Homogenisierkammer 13 eingeleitet und dort homogenisiert, bevor dann anschließend zwei annähernd gleiche Suspensionsteilstöme 14 und 15 auf den linken Wärmetauscherstrang A einerseits bzw. auf den rechten Wärmetauscherstrang B andererseits aufgeteilt werden, wie das im Detail in Figur 2 näher zu sehen ist.

Nach Figur 2 wird Zementrohmehl 16 oben in den linken Zyklonschwebegas-Wärmetauscherstrang A aufgegeben, wo es nacheinander die Zyklonstufen im kombinierten Gleich-/Gegenstrom zum heißen Abgas einer Calcinationsstufe 17 durchwandert, um im untersten Zyklon 18 vom heißen Abgasstrom abgetrennt und als hochgradig (z. B. 95 %) calciniertes Zementrohmehl 19 in die Einlaufkammer des Drehrohrofens 10 eingeführt zu werden, in dessen Sinterzone es zu Zementklinker gebrannt wird, der anschließend in einem Klinkerkühler 20, z. B. Rostkühler abgekühlt wird. Der abgekühlte Zementklinker verlässt den Kühler 20 bei 21.

Ein weiterer Rohmehlteilstrom 22 wird oben auf den rechten Zyklonschwebegas-Wärmetauscherstrang B aufgegeben, wo er ebenfalls nacheinander die Zyklonschwebegas-Wärmetauscherstufen im kombinierten Gleich-/Gegenstrom zum heißen Abgas der Calcinationsstufe 17 durchwandert, um im untersten Zyklon 23 vom heißen Abgasstrom abgetrennt und als hochgradig calciniertes Zementrohmehl 24 ebenfalls in die Einlaufkammer des Drehrohrofens 10 eingeführt zu werden.

In der mit Brennstoff 25a, 25b und Tertiärluft 26 des Klinkerkühlers 20 versorgten Calcinationsstufe 17 wird das aus den zweituntersten Zyklonstufen der beiden Wärmetauscherstränge austretende vorgewärmte Zementrohmehl hochgradig vorcalciniert. Dabei wird der Brennstoff 25a an wenigstens einer sogenannten DeNOₓ-Brennstelle in der vom Drehrohrofen 10 kommenden Ofenabgassteigleitung mit Vorteil unterstöchiometrisch verbrannt zwecks Erzeugung einer CO-haltigen Reduktionszone zur Reduktion des im Drehofenabgas enthaltenen Schadstoffs NOₓ, während der Brennstoff 25b in der vom Klinkerkühler kommenden Tertiärluft 26 mit Vorteil überstöchiometrisch verbrannt werden kann. Der Restausbrand des in der DeNOₓ-Reduktionszone zunächst überschüssig gebliebenen CO und ggfs. unverbrannt gebliebener Kohlenwasserstoffe kann durch Sauerstoff aus überschüssiger Tertiärluft 26 erfolgen.

In der mit Brennstoff versorgten Calcinierstufe 17 wird die Gas-Feststoffsuspension aus einem aufsteigenden Rohrleitungsast 27 um etwa 180° in einen absteigenden Rohrleitungsast 28 umgelenkt. Trotz dieser Strömungsumlenkung kann es beim Rohrcalcinator zu inhomogenen Beladungszuständen des Gases kommen, z. B. zu ungleichmäßig über den Querschnitt verteilten restlichen nicht vollständig ausgebrannten CO-Gassträhnen. Daher besteht die Erfindung darin, in der Calcinierstufe 17, spästens an ihrem Ende strömungsseitig vor ihrer Verzweigung und Aufteilung auf die einzelnen Wärmetauscherstränge A und B eine Wirbelkammer/Mischkammer/Homogenisierkammer 29 anzuordnen, beispielsweise an der höchstgelegenen Stelle bzw. im Bereich der Strömungsumlenkung der schwanenhalsförmigen Calcinierstufe 17. Die Gas-Feststoffsuspension wird in der Homogenisierkammer 29 intensiv vermischt bzw. homogenisiert bzw. vergleichmäßigt, bevor dann die Gas-Feststoffsuspension auf die beiden Wärmetauscherstränge A und B aufgeteilt wird.

Gemäß Ausführungsbeispiel der Figur 2 kann die Wirbelkammer/Mischkammer/Homogenisierkammer 29 in ihrem oberen Bereich eine Öffnung 30 zum tangentialen Eintritt der Gas-Feststoffsuspension und an ihrer Unterseite die zwei Rohrverzweigungs-Auslässe 28 und 31 aufweisen, durch welche die beiden Wärmetauscherstränge A und B mit Gas-Feststoffsuspensionen beschickt werden, die nicht mehr durch unterschiedliche Beladungszustände gekennzeichnet sind.

Aus Figur 2 geht noch hervor, dass der freie zylindrische Querschnitt der Homogenisierkammer 29 über ein an ihrer Unterseite angeordnetes Konusteil 32 auf den Querschnitt der Auslässe mit der Rohrleitungsverzweigung 28, 31 verjüngt sein kann.

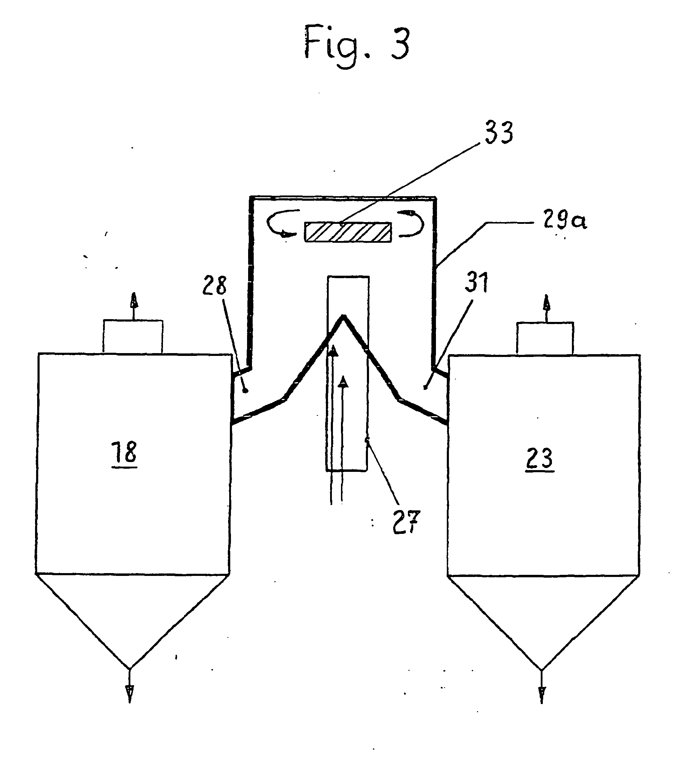

Figur 3 zeigt als Variante zu Figur 2 eine andere Ausführungsform der Wirbelkammer/Mischkammer/Homogenisierkammer 29a, in der feststehend ein Drallerzeuger 33 eingebaut ist, der zentral von unten von der Gas-Feststoffsuspension des aufsteigenden Rohrleitungsastes 27 der Calcinierstufe 17 angeströmt ist mit Ablenkung der Strömung zur Peripherie, Umlenkung nach unten und Leitung zu wenigstens zwei unteren Auslässen 28, 31 zwecks Aufteilung der homogenisierten Gas-Feststoffsuspension auf die Wärmetauscherstränge A und B.

## Patentansprüche

1. Anlage zur Herstellung von Zementklinker aus Rohmehl, das in wenigstens zwei zueinander parallelen Zyklonschwebegas-Wärmetauschersträngen (A, B) vorerhitzt und in einer mit Brennstoff versorgten Calcinierstufe (11, 17) vorcalciniert wird, aus der die Gas-Feststoffsuspension durch Suspensionsaufteilung in die jeweils unterste Zyklonstufe (18, 23) der Zyklonschwebegas-Wärmetauscherstränge (A, B) zwecks Abtrennung des vorcalcinierten Rohmehls vom Abgasstrom eingeführt ist, wobei die vorcalcinierten Rohmehlteilströme (19, 24) aller Wärmetauscherstränge anschließend in einen Drehrohrofen (10) für den Zementklinkerbrand eingeführt sind,
**dadurch gekennzeichnet, dass** in der Calcinierstufe (11, 17) strömungsmäßig vor ihrer Verzweigung und Aufteilung auf die einzelnen Wärmetauscherstränge (A, B) eine Wirbelkammer/Mischkammer/ Homogenisierkammer (13, 29, 29a) angeordnet ist mit einer Eintrittsöffnung für die Gas-Feststoffsuspension (27) und mit wenigstens zwei Auslässen (28, 31) zum Austritt der vergleichmäßigten Gas-Feststoffsuspensions-Teilströme.

2. Anlage nach Anspruch 1,
**dadurch gekennzeichnet, dass** die Wirbelkammer/Mischkammer/-Homogenisierkammer (29) in ihrem oberen Bereich eine Öffnung (30) zum tangentialen Eintritt der Gas-Feststoffsuspension und an ihrer Unterseite zwei oder mehr Auslässe (28, 31) zum Austrag der vermischten homogenisierten Gas-Feststoffsuspension aufweist, wobei die Auslässe über jeweils eine Rohrleitung mit der untersten Zyklonstufe (18, 23) jeweils eines Zyklonschwebegas-Wärmetauscherstranges (A, B) verbunden sind.

3. Anlage nach Anspruch 2,
**dadurch gekennzeichnet, dass** der freie zylindrische Querschnitt der Homogenisierkammer (29) über ein an ihrer Unterseite angeordnetes Konusteil (32) auf den Querschnitt der Auslässe mit der Rohrleitungsverzweigung (28, 31) verjüngt ist.

4. Anlage nach einem der Ansprüche 1 bis 3,
**dadurch gekennzeichnet, dass** in der Wirbelkammer/Mischkammer/ Homogenisierkammer (29a) ein Drallerzeuger (33) für die einströmende Gas-Feststoffsuspension (27) eingebaut ist.

5. Anlage nach Anspruch 4,
**dadurch gekennzeichnet, dass** der Drallerzeuger (33) in der Wirbelkammer (29a) feststehend eingebaut ist und zentral von unten von der Gas-Feststoffsuspension des aufsteigenden Rohrleitungsastes (27) der Calcinierstufe (17) angeströmt ist mit Ablenkung der Strömung zur Peripherie, Umlenkung nach unten und Leitung zu wenigstens zwei unteren Auslässen (28, 31) zwecks Aufteilung der homogenisierten Gas-Feststoffsuspension auf die Wärmetauscher-Stränge (A, B).

6. Anlage nach einem der Ansprüche 1 bis 5,
**dadurch gekennzeichnet, dass** in den aufsteigenden Ast (27) der Calcinierstufe (17) in die Drehofenabgasleitung, bevor die vom Klinkerkühler kommende Tertiärluft (26) zugemischt wird, eine DeNOₓ-Brennstelle (25a) einmündet zwecks Schaffung einer CO-haltigen Reduktionszone zur NOₓ-Reduktion im Abgas.

7. Anlage nach einem der Ansprüche 1 bis 6,
**dadurch gekennzeichnet, dass** die Homogenisierkammer (29, 29a) mit einer Einrichtung zur Eindüsung von Reaktanten wie NH₃ oder Ammoniakwasser zwecks zusätzlicher Absenkung des in den Abgasen vorhandenen NOₓ-Gehaltes ausgestattet ist.

## Claims

1. Plant for producing cement clinker from raw meal, which raw meal is preheated in at least two mutually parallel cyclone suspension heat exchanger trains (A, B) and is precalcined in a fuelled calcination stage (11, 17), from which the gas-solid suspension is introduced by suspension splitting into the respectively lowermost cyclone stage (18, 23) of the cyclone suspension heat exchanger trains (A, B) for the purpose of separating the precalcined raw meal from the exhaust gas stream, after which the precalcined raw meal sub-streams (19, 24) of all heat exchanger trains are introduced into a rotary kiln (10) for baking of the cement clinker, **characterized in that** in the calcination stage (11, 17), fluidically before its branching and splitting amongst the individual heat exchanger trains (A, B), there is arranged a turbulence chamber/mixing chamber/homogenization chamber (13, 29, 29a) having an intake opening for the gas-solid suspension (27) and having at least two outlets (28, 31) for the discharge of the homogenized gas-solid suspension sub-streams.

2. Plant according to Claim 1, **characterized in that** the turbulence chamber/mixing chamber/homogenization chamber (29) has in its upper region an opening (30) for the tangential intake of the gas-solid suspension and on its bottom side two or more outlets (28, 31) for the discharge of the mixed homogenized gas-solid suspension, the outlets being connected by a respective pipe to the lowermost cyclone stage (18, 23) of a respective cyclone suspension heat exchanger train (A, B).

3. Plant according to Claim 2, **characterized in that** the free cylindrical cross section of the homogenization chamber (29) is tapered, via a cone part (32) arranged on its bottom side, to the cross section of the outlets comprising the pipe branch (28, 31).

4. Plant according to one of Claims 1 to 3, **characterized in that** in the turbulence chamber/mixing chamber/homogenization chamber (29a) there is installed a swirl generator (33) for the inflowing gas-solid suspension (27).

5. Plant according to Claim 4, **characterized in that** the swirl generator (33) is fixedly installed in the turbulence chamber (29a) and is flowed against centrally from below by the gas-solid suspension of the rising pipe branch (27) of the calcination stage (17), with deflection of the flow to the periphery, diversion downwards and conduction to at least two lower outlets (28, 31) for the purpose of splitting the homogenized gas-solid suspension amongst the two heat exchanger trains (A, B).

6. Plant according to one of Claims 1 to 5, **characterized in that** a DeNOx burner (25a) opens out into the rising branch (27) of the calcination stage (17) into the rotary kiln exhaust gas line, prior to the admixture of the tertiary air (26) emanating from the clinker cooler, for the purpose of creating a CO-containing reduction zone for the reduction of NOx in the exhaust gas.

7. Plant according to one of Claims 1 to 6, **characterized in that** the homogenization chamber (29, 29a) is equipped with a device for the injection of reactants such as NH₃ or ammonia water, for the purpose of additionally lowering the NOx content present in the exhaust gases.

## Revendications

1. Dispositif pour la fabrication de clinker de ciment à partir de farine crue, qui est préchauffée dans au moins deux lignes d'échangeur de chaleur avec gaz de mise en suspension à cyclone parallèles l'une à l'autre (A, B) et est précalcinée dans un étage de calcination (11, 17) alimenté en combustible, à partir duquel la suspension de matières solides dans le gaz est introduite par répartition de la suspension dans l'étage de cyclone inférieur respectif (18, 23) des lignes d'échange de chaleur avec gaz de mise en suspension à cyclone (A, B) en vue de la séparation de la farine crue précalcinée et du courant de gaz d'échappement, dans lequel les courants partiels de farine crue précalcinée (19, 24) de toutes les lignes d'échangeur de chaleur sont ensuite introduits dans un four tubulaire tournant (10) pour la cuisson du clinker de ciment, **caractérisé en ce qu'**une chambre de turbulence/chambre de mélange/chambre d'homogénéisation (13, 29, 29a) est disposée dans l'étage de calcination (11, 17), avant sa bifurcation et sa répartition sur les lignes d'échangeur de chaleur individuelles (A, B), avec une ouverture d'entrée pour la suspension de matières solides dans le gaz (27) et avec au moins deus sorties (28, 31) permettant la sortie des courants partiels uniformisés de suspension de matières solides dans le gaz.

2. Dispositif selon la revendication 1, **caractérisé en ce que** la chambre de turbulence/chambre de mélange/chambre d'homogénéisation (29) présente dans sa région supérieure une ouverture (30) destinée à l'entrée tangentielle de la suspension de matières solides dans le gaz et à sa face inférieure deux ou plusieurs sorties (28, 31) destinées à l'extraction de la suspension mélangée et homogénéisée de matières solides dans le gaz, dans lequel les sorties sont raccordées par une conduite tubulaire respective à l'étage de cyclone inférieur (18, 23) des lignes d'échangeur de chaleur avec gaz de mise en suspension à cyclone respectives (A, B).

3. Dispositif selon la revendication 2, **caractérisé en ce que** la section transversale cylindrique libre de la chambre d'homogénéisation (29) est rétrécie à la section transversale des sorties avec la bifurcation de conduite tubulaire (28, 31) au moyen d'une partie conique (32) installée à sa face inférieure.

4. Dispositif selon l'une quelconque des revendications 1 à 3, **caractérisé en ce qu'**un générateur de tourbillon (33) pour la suspension entrante de matières solides dans le gaz (27) est disposé dans la chambre de turbulence/chambre de mélange/chambre d'homogénéisation (29a).

5. Dispositif selon la revendication 4, **caractérisé en ce que** le générateur de tourbillon (33) est monté de façon solidaire dans la chambre de turbulence (29a) et est abordé au centre par le bas par la suspension de matières solides dans le gaz de la branche de conduite tubulaire montante (27) de l'étage de calcination (17) avec déviation de l'écoulement vers la périphérie, renvoi vers le bas et conduite vers au moins deux sorties inférieures (28, 31) en vue de répartir la suspension homogénéisée de matières solides dans le gaz sur les lignes d'échangeur de chaleur (A, B).

6. Dispositif selon l'une quelconque des revendications 1 à 5, **caractérisé en ce qu'**un point de combustion DeNOₓ (25a) débouche dans la branche montante (27) de l'étage de calcination (17) dans la conduite des gaz d'échappement du four tournant, avant que l'air tertiaire (26) provenant du refroidisseur de clinker ne soit ajouté, en vue de créer une zone de réduction contenant du CO pour la réduction des NOₓ des gaz d'échappement.

7. Dispositif selon l'une quelconque des revendications 1 à 6, **caractérisé en ce que** la chambre d'homogénéisation (29, 29a) est équipée d'un dispositif destiné à injecter des réactifs comme du NH₃ ou de l'eau ammoniacale en vue d'abaisser encore la teneur en NOₓ présente dans les gaz d'échappement.
